# EUROPEAN PATENT APPLICATION

(11) **EP 4 311 433 A1**
(43) Date of publication of application: **31.01.2024**
(21) Application number: 23464001.9
(22) Date of filing: 30.01.2023
(51) Int. Cl.: A21D 13/80, A21D 13/064, A23L 33/21, A23L 33/115, A23L 33/125, A23L 33/14, A23L 33/185, A21D 8/06

(54) **NUTRITIONALLY ENRICHED GINGERBREAD AND PROCESS FOR OBTAINING IT**

(30) Priority: 26.07.2022 RO 202200447
(71) Applicant: Stefan cel Mare University of Suceava, 720229 Suceava, County Suceava (RO)
(72) Inventor: Dabija, Adriana, Loc. Bulai (Com. Moara), Judetul Suceava (RO); Chetrariu, Ancuta, Suceava, Judetul Suceava (RO)

(57) **Abstract**

The invention refers to an assortment of gingerbread, with an improved nutritional value, with a high protein and fiber content, intended for all categories of consumers. The nutritionally enriched gingerbread, according to the invention, is obtained from the following ingredients: wheat flour, millet flour, spent grain flour, dandelion syrup, hemp oil, yeast flakes, ginger, fenugreek, turmeric, sodium bicarbonate and ammonium carbonate. Obtaining nutritionally enriched gingerbread, according to the invention, includes the following stages: qualitative and quantitative reception of raw and auxiliary materials, dosing and preparation of raw and auxiliary materials, mixing of components to obtain the dough, rolling the dough to homogenize and improve the internal structure, modelling (cutting) in pieces, baking in an electric oven at 150°C for 20 minutes, cooling and glazing with a sugar syrup at 60°C and packaging the finished product.

## Description

The invention refers to a flour product from the gingerbread category, which includes wheat flour, millet flour, spent grain flour, dandelion syrup, hemp oil, yeast flakes, powdered ginger, powdered fenugreek, powdered turmeric, sodium bicarbonate and ammonium carbonate and to a process for obtaining it.

The flour products in this category are mostly known to be obtained from hard doughs mixed with chemical leavening agents, syrups, fats and other improvers of taste and nutritional value with a porous structure (Zaharia, T., 1983; R 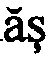 asenescu et al.., 1988; Banu et al., 2006). The disadvantages are that some of these products may have a low nutritional value and poor sensory characteristics.

The process, according to the invention, removes these disadvantages and widens the range of gingerbread products in that they are obtained from wheat flour, millet flour, spent grain flour and dandelion syrup, being recommended for people who want to have a healthy diet.

The technical problem that the invention solves consists in obtaining a product with improved sensory characteristics and nutritional value, with a high protein and fiber content, which can be consumed by all categories of consumers.

The production of the product, according to the invention, provides us with the qualitative and quantitative reception of the raw and auxiliary materials, dosing and preparation of the raw and auxiliary materials, mixing of the components to obtain the dough, rolling of the dough to homogenize and improve the internal structure, modelling (cutting) into pieces, baking in the electric oven, cooling and packaging of the final product.

The application of the invention leads to the following advantages:
- obtaining an assortment of gingerbread with the role of functional food thanks to the ingredients in the manufacturing recipe. Millet flour contains a large amount of protein, dietary fiber, essential fatty acids, some mineral substances such as potassium, zinc, magnesium, calcium, iron, vitamins: mainly B complex vitamins (Dabija, A., 2020). Spent grain flour contains proteins, dietary fibers and mineral substances (Chetrariu & Dabija, 2021). Hemp oil is particularly rich in polyunsaturated essential fatty acids and tocopherols (Dabija, A., 2020);
- obtaining an assortment of gingerbread with beneficial effects on health. Frequent consumption of products based on millet flour helps to reduce the absorption of carbohydrates and fats, protects blood vessels from arteriosclerosis, has a role in the management of various physiological disorders, such as diabetes, hypertension, vascular fragility, hypercholesterolemia, prevention lipoprotein oxidation and also improves gastrointestinal health (Banu et al., 2010; Dabija, A., 2020). Spent grain flour, through its fiber intake, has major implications in digestion, by slowing down gastric emptying, prolonging intestinal transit time and reducing the rate of absorption of nutrients in the small intestine (Chetrariu & Dabija, 2021). Dandelion is used for the treatment of liver and spleen disorders, painful digestive disorders, biliary dyskinesia, cholecystitis, stimulation of pancreatic secretions, kidney and gallstones, for the treatment of hepatitis, contributes to the reduction of serum cholesterol and uric acid levels. Ginger, fenugreek, hemp oil and turmeric have antioxidant and anti-inflammatory properties, have a hypocholesterolemic and hypoglycemic effect and support the body's immunity;
- obtaining an assortment of gingerbread with a low glycemic index, high protein and dietary fiber content, easily assimilated by the body; fiber intake improves blood sugar levels and normalizes insulin secretion.

Next, an example of the realization of the nutritionally enriched gingerbread product according to the invention is given.

To obtain 100 kg of nutritionally enriched gingerbread, the following ingredients are required: 40 kg of type 480 wheat flour, 10 kg of millet flour, 10 kg of spent grain flour, 50 kg of dandelion syrup, 1.5 kg of inactive yeast flakes, 0.150 L hemp oil, 0.15 kg powdered ginger, 0.15 kg powdered fenugreek, 0.03 kg turmeric, 0.70 kg ammonium carbonate and 0.40 kg sodium bicarbonate.

To obtain the nutritionally enriched gingerbread product, a process is applied that includes the following technological operations: qualitative and quantitative reception of raw and auxiliary materials, dosing of raw and auxiliary materials according to the manufacturing recipe, followed by the preparation of the dough, as follows: introduce the dandelion syrup into the mixer and, while mixing, add the hemp oil, ginger and fenugreek powder, turmeric, ammonium carbonate, sodium bicarbonate, inactive yeast flakes and stirred for 5-6 minutes.

While kneading, gradually add wheat flour, millet flour, spent grain flour and knead for 30 minutes. After kneading, the dough is placed in a vessel to rest for 24 hours at a temperature of 10°C.

After resting, the dough is kneaded for 10 minutes in order to even it out. The dough is shaped into a sheet with a thickness of 10 mm from which square pieces with a size of 25 mm are cut lengthwise and wide. The pieces of dough are placed on trays at a distance of 2 cm and placed in the electric oven at 150°C for 20 minutes. After baking, the product is cooled and glazed with sugar syrup at a temperature of 60°C, followed by drying on metal sieves for 30 minutes. After drying, the gingerbread is packed in 300g bags.

The nutritionally enriched gingerbread product, according to the invention, is a functional food by its composition, with an increased content of bioactive compounds, dietary fibers and proteins. The nutritionally enriched gingerbread contains 80.25% carbohydrate, 7.71% protein, 2.96% lipid, and 3.72% fiber. The product has an energy value of 378 kcal/100 g product, 1605 kJ/100 g product, respectively.

The process of obtaining the nutritionally enriched gingerbread, according to the invention, can be reproduced with the same characteristics and performances whenever necessary, a fact that represents an argument in order to comply with the criterion of industrial applicability.

### REFERENCES

1. Banu, C., et al., Explanatory dictionary of science and technology. Food industry, AGIR Publishing House, Bucharest, 2006
2. Banu, C., et al., Functional foods, food supplements and medicinal plants, ASAB Publishing House, Bucharest, 2010
3. Chetrariu, A. & Dabija, A., Spent grain from malt whisky: assessment of the phenolic compounds, Molecules, 26(11), 3236, 2021
4. Dabija, A., Unconventional raw materials for the bakery industry, Performantica Publishing House, Iasi, 2020
5. R 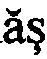 asenescu *et al., Guidance for the food industry, II,* Technical Publishing House, Bucharest, 1988
6. Zaharia D., *The worker's book of flour products industry,* Technical Publishing House, Bucharest, 1983

## Claims

1. Nutritionally enriched gingerbread, **characterized by** the fact that, for 100 kg of the finished product, the following raw materials are required: a quantity of 40 kg of type 480 wheat flour, a quantity of 10 kg of millet flour, a quantity of 10 kg of spent grain flour, a quantity of 50 kg of dandelion syrup, a quantity of 1.5 kg of inactive yeast, a quantity of 0.150 L of hemp oil, a quantity of 0.15 kg of powdered ginger, a quantity of 0.15 kg of powdered fenugreek, an amount of 0.03 kg of turmeric, an amount of 0.70 kg of ammonium carbonate and an amount of 0.40 kg of sodium bicarbonate.

2. The process for obtaining the nutritionally enriched gingerbread, made according to claim 1, **characterized by** its consistency of the qualitative and quantitative reception of raw and auxiliary materials, the dosing of raw and auxiliary materials according to the manufacturing recipe, followed by the preparation of the dough by introducing it into the mixer of dandelion syrup, hemp oil, ginger and fenugreek powder, turmeric, inactive yeast, ammonium carbonate, sodium bicarbonate, mix for 5-6 minutes, add wheat flour, millet flour, spent grain flour, knead for 30 minutes, dough resting for 24 hours at a temperature of 10°C, re-kneading for 10 minutes in order to even it out, followed by modelling in the form of a sheet with a thickness of 10 mm from which square pieces are cut lengthwise and wide with 25 mm side, bake pieces of dough in trays 2 cm apart in an electric oven at 150°C for 20 minutes, cool and glaze with sugar syrup at 60°C, drying on metal sieves for 30 minutes and packaging in 300g bags. The gingerbread containing 80.25% carbohydrates, 7.71% proteins, 2.96% lipids, and 3.72% fibers, with an energy value of 378 kcal/100 g product, 1605 kJ/100 g product, respectively.
